# EUROPEAN PATENT APPLICATION

(11) **EP 4 660 616 A1**
(43) Date of publication of application: **10.12.2025**
(21) Application number: 24749908.0
(22) Date of filing: 12.01.2024
(51) Int. Cl.: G01N 21/78, G01J 3/52, G01N 21/01, G01N 35/04

(54) **ANALYSIS DEVICE**

(30) Priority: 30.01.2023 JP 2023012144
(71) Applicant: FUJIFILM Corporation, Tokyo 106-8620 (JP)
(72) Inventor: MIURA, Yoshinobu, Ashigarakami-gun, Kanagawa 258-8538 (JP)
(74) Representative: Dehns Germany Partnerschaft mbB
(86) International application number: PCT/JP2024/000680
(87) International publication number: WO 2024/161953

(57) **Abstract**

An analysis apparatus analyzes a test substance sample using an analysis chip having a reaction region in which a reagent reacting with a test target substance is fixed. The analysis apparatus includes a light source that irradiates the reaction region with light, a photodetector that detects reflected light from the reaction region and outputs a reflected light amount value corresponding to a light amount of the reflected light, at least two kinds of optical density plates of a first optical density plate having first optical density of 0 to 0.5 and a second optical density plate having second optical density of 0.8 to 1.5, and a processor. The processor is configured to execute a deriving process of detecting the reflected light, converting the reflected light amount value into a relative light amount value that is a gradation value within a predetermined gradation range, and deriving optical density of the reaction region from the relative light amount value, in accordance with a predetermined derivation condition, and in the deriving process, selectively apply either a first derivation condition determined by using the first optical density plate or a second derivation condition determined by using the second optical density plate as the derivation condition.

## Description

### BACKGROUND OF THE INVENTION

### 1. Field of the Invention

The present disclosure relates to an analysis apparatus.

### 2. Description of the Related Art

An analysis apparatus that analyzes a test substance sample by measuring a reaction state between the test substance sample and a reagent is known (see, for example, JP2003-287501A). By measuring the reaction state, for example, the concentration of the test target substance included in the test substance sample is measured. For example, the test substance sample is blood, urine, or the like. An example of an analysis chip is a dry analysis chip that includes a reagent layer including a reagent.

The test substance sample is supplied to the reagent layer of the above-described analysis chip, and the test target substance in the test substance sample reacts with the reagent of the reagent layer and a reaction substance that develops color is generated. The concentration of the test target substance in the test substance sample can be measured by irradiating the reagent layer with irradiation light including light of a wavelength absorbed by the color-developing reaction substance from a light source and acquiring a detection signal corresponding to reflected light from the reagent layer (corresponding to a reaction region).

### SUMMARY OF THE INVENTION

In the analysis apparatus described in JP2003-287501A, a white plate and a black plate whose optical density is known are mounted inside and the optical density of the reagent layer is calculated from the reflected light amount from the reagent layer with respect to the reflected light amount of the white and black plates, and the concentration of the test target substance is derived based on a calibration curve indicating the relationship between the concentration of the test target substance and optical density of the reagent layer, which is obtained in advance.

When the optical density is calculated, an analog signal value indicating an amount of reflected light received by an optical sensor needs to be converted into a digital signal value. For example, in the case of an 8-bit analog-digital (AD) converter, the analog signal value is converted into a numerical value of 0 to 255 obtained from division by 256. In this case, conventionally, the reflected light amount obtained from the white plate is set to be about 250, which is near the maximum digital signal value.

However, depending on the measurement item, there is a reagent with a small reflected light amount or a little change in color development. For example, there is a reagent with a relatively high amount of color development with optical density of 1 to 2. When the reflected light amount obtained from the white plate is near the maximum digital signal value, the reflected light amount is extremely small when the optical density is relatively high. Therefore, a noise component in the detection signal is increased, which leads to a decrease in measurement accuracy. Further, since the resolution is low, the measurement accuracy may be low.

An object of the present disclosure is to provide an analysis apparatus that detects reflected light from a reaction region of an analysis chip and measures the concentration of a test target substance, the analysis apparatus having improved measurement accuracy compared to related art.

An analysis apparatus of the present disclosure is an analysis apparatus that analyzes a test substance sample using an analysis chip having a reaction region in which a reagent reacting with a test target substance is fixed, the analysis apparatus including:
a light source that irradiates the reaction region of the analysis chip with light;
a photodetector that detects reflected light from the reaction region generated when the reaction region is irradiated with the light, and outputs a reflected light amount value corresponding to a light amount of the reflected light;
at least two kinds of optical density plates of a white first optical density plate having first optical density of 0 to 0.5 and a gray second optical density plate having second optical density of 0.8 to 1.5; and
a processor,
in which the processor is configured to
execute a deriving process of detecting the reflected light, converting the reflected light amount value into a relative light amount value that is a gradation value within a predetermined gradation range, and deriving optical density of the reaction region from the relative light amount value, in accordance with a predetermined derivation condition, and
in the deriving process, selectively apply either a first derivation condition determined by using the first optical density plate or a second derivation condition determined by using the second optical density plate as the derivation condition.

The processor may be configured to selectively apply either the first derivation condition or the second derivation condition based on a preset condition.

The preset condition may be a type of the analysis chip, and the processor may be configured to apply the second derivation condition when the analysis chip is an analysis chip including a specific reagent.

The analysis chip including the specific reagent may be an analysis chip in which the optical density of the reaction region after reaction between the specific reagent and the test target substance exceeds a preset threshold value.

The analysis apparatus may further include a black plate for obtaining a light amount value to be assigned to a lower limit value of the gradation range.

The photodetector is preferably an image sensor having a light-receiving surface on which a plurality of light-receiving elements are arranged at least one dimensionally.

The first derivation condition and the second derivation condition may be different in exposure time at a time of detection of the reflected light. In this case, the exposure time in the second derivation condition is longer than the exposure time in the first derivation condition.

The first derivation condition and the second derivation condition may be different in a light amount value to be assigned to an upper limit value of the gradation range when the reflected light amount value is converted into the relative light amount value. In this case, the light amount value in the second derivation condition is smaller than the light amount value in the first derivation condition.

The analysis chip is preferably a dry analysis chip using a solid-phase reagent as the reagent.

According to the technique of the present disclosure, measurement accuracy can be improved compared to the related art in the analysis apparatus that detects reflected light from the reaction region of the analysis chip and measures the concentration of a test target substance.

### BRIEF DESCRIPTION OF THE DRAWINGS

Fig. 1 is a schematic diagram illustrating an overall configuration of an analysis apparatus according to an embodiment;
Fig. 2A is a perspective view of an analysis chip, and Fig. 2B is a plan view of a back surface of the analysis chip;
Fig. 3 is a schematic configuration diagram of a measurement unit of the analysis apparatus of a first embodiment;
Fig. 4 is a diagram illustrating the relationship between a reflected light amount and reflectivity of an analysis chip in a conventional analysis apparatus;
Fig. 5A is a graph illustrating the correlation between a relative light amount value and reflectivity acquired for a white plate, and Fig. 5B is a graph illustrating the correlation between a relative light amount value and reflectivity acquired for a gray plate;
Fig. 6 is a summary diagram of an acquisition process of the correlation between the relative light amount value and the reflectivity;
Fig. 7 is an explanatory diagram of a method of determining the exposure time in the analysis apparatus of the first embodiment;
Fig. 8 is a summary diagram of a measurement process of the analysis apparatus of the first embodiment;
Fig. 9 illustrates captured images presenting the effect of using the gray plate;
Fig. 10A is a graph obtained by dropping each of test substances having different calcium concentrations on an analysis chip for Ca detection and detecting a change in optical density with time within first exposure time, and Fig. 10B is a graph obtained by dropping each of test substances having different calcium concentrations on the analysis chip for Ca detection and detecting a change in optical density with time within second exposure time;
Fig. 11 is a schematic configuration diagram of a measurement unit of an analysis apparatus of a second embodiment;
Fig. 12 is a graph illustrating the relationship between a primary reflected light amount value and a gradation value (that is, relative light amount value);
Fig. 13 is an explanatory diagram of a method of determining the exposure time in the analysis apparatus of the second embodiment; and
Fig. 14 is a summary diagram of a measurement process of the analysis apparatus of the second embodiment.

### DESCRIPTION OF THE PREFERRED EMBODIMENTS

Hereinafter, preferred embodiments of the present invention will be described with reference to the drawings.

### First Embodiment

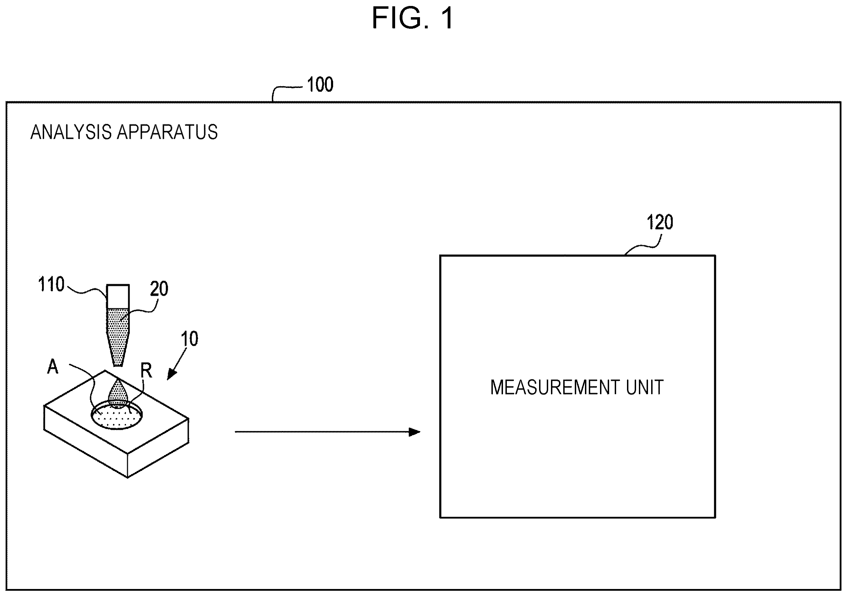

An analysis apparatus 100 according to a first embodiment of the present disclosure illustrated in Fig. 1 is an example of an analysis apparatus that analyzes a test substance sample 20, and measures the concentration of a test target substance included in the test substance sample 20 using a dry analysis chip 10. More specifically, the analysis apparatus 100 of the present example uses whole blood, serum, blood plasma, or the like as the test substance sample 20, and optically measures the concentration of the test target substance included in the test substance sample 20.

The analysis apparatus 100 includes a dispensing mechanism 110 and a measurement unit 120. The dispensing mechanism 110 drops the test substance sample 20 on the analysis chip 10. The measurement unit 120 executes a process of measuring the concentration of the test target substance using the analysis chip 10 on which the test substance sample 20 has been dropped. The measurement unit 120 is loaded with the analysis chip 10.

In a case where measurement needs to be performed after a lapse of time since dropping of the test substance sample 20, the test substance sample 20 may be dropped before the measurement unit 120 is loaded with the analysis chip 10. The timing of dropping is appropriately determined according to the type of the test substance sample 20 or the like.

The analysis chip 10 has a reaction region A having a reagent R. The reagent R generates a substance that develops a specific color by reacting with the test target substance. The substance that develops color by this reaction is hereinafter referred to as a reaction substance. As the reagent R, for example, a dry reagent which is in a dry state at least at the time of shipment is used. The test substance sample 20 is dropped on the reaction region A of the analysis chip 10.

The measurement unit 120 acquires a detection signal indicating the optical density of the reaction region A using the analysis chip 10 on which the test substance sample 20 has been dropped. The measurement unit 120 derives the concentration of the test target substance included in the test substance sample 20, based on the acquired detection signal.

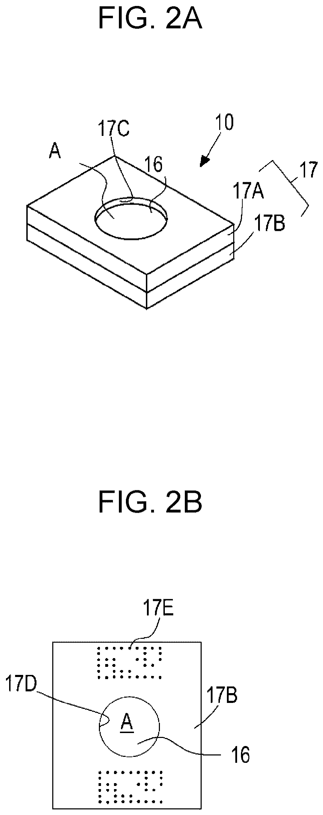

Fig. 2A illustrates a perspective view of the analysis chip 10, and Fig. 2B illustrates a plan view of the back surface of the analysis chip 10. As illustrated in Fig. 2A, the analysis chip 10 has a carrier 16 on which the test substance sample 20 is to be dropped, and the carrier 16 is accommodated in a case 17. The case 17 is constituted by a first case 17A and a second case 17B, and accommodates the carrier 16 so as to sandwich the carrier 16. An opening 17C functioning as a dropping opening through which the test substance sample 20 is to be dropped on the carrier 16 is formed in the first case 17A. An opening 17D for irradiating the carrier 16 with light is formed in the second case 17B (see Fig. 2B).

The carrier 16 is exposed at the opening 17C of the first case 17A constituting the front surface of the analysis chip 10. Further, the carrier 16 is exposed at the opening 17D of the second case 17B constituting the back surface of the analysis chip 10. The region of the carrier 16 exposed at the opening 17D constitutes the reaction region A in which a reagent is fixed.

The analysis apparatus 100 can analyze a plurality of measurement items for the test substance sample 20 by including a plurality of types of analysis chips 10 including different reagents R. Since the reacting substance differs depending on the type of reagent R, different reagents R are used for detection of different test target substances. The test target substance differs depending on the measurement item, and the analysis chip 10 having a specific reagent R is used according to the test target substance. Item information related to a measurement item is given to the analysis chip 10 as an encoded information code 17E. The item information is identification information (a reagent name, an identification code, and the like) of a reagent fixed to the carrier 16 of the analysis chip 10, identification information (an item name, an identification code, and the like) of a measurement item measured by the reagent, or the like.

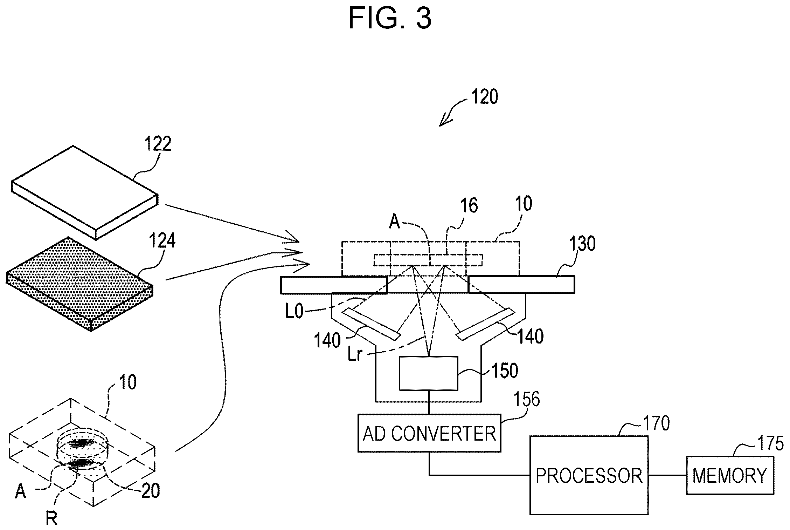

Fig. 3 illustrates a configuration of the measurement unit 120 of the analysis apparatus 100. The measurement unit 120 includes a first optical density plate 122, a second optical density plate 124, a loading unit 130, light sources 140, a photodetector 150, an AD converter 156, a processor 170, and a memory 175. The first optical density plate 122 and the second optical density plate 124 are used for determining a derivation condition for deriving the concentration of a test target substance. The first optical density plate 122, the second optical density plate 124, and the derivation condition will be described later in detail. The loading unit 130 is loaded with the analysis chip 10 and holds the analysis chip 10 subjected to measurement. In order to acquire a reference light amount value, the first optical density plate 122 and the second optical density plate 124 are also selectively loaded in the loading unit 130. Fig. 3 illustrates a state in which the analysis chip 10 is loaded in the loading unit 130.

The light sources 140 irradiate the analysis chip 10 with light. More specifically, the light sources 140 irradiate the reaction region A exposed at the opening 17D of the case 17 with light L0. The wavelength range of light is determined according to at least one of the test target substance or the reagent R or the like. For example, in the present example, as described above, a reaction substance that develops a specific color is generated by the reaction between the test target substance and the reagent R. Since the light L0 radiated by the light sources 140 is irradiation light for detecting whether the reaction substance is generated, the wavelength range is determined according to the color developed by the reaction substance. Since the reaction substance is generated by the reaction between the test target substance and the regent R, the wavelength range of the light L0 radiated by the light sources 140 is eventually determined according to at least one of the test target substance or the regent R. Hereinafter, the light L0 radiated by the light sources 140 is referred to as irradiation light L0. For example, the irradiation light L0 of the present example is light including a wavelength range absorbed by the reaction substance in order to detect the reaction substance.

In particular, the wavelength range of the irradiation light L0 is preferably limited to a wavelength range absorbed by the reaction substance. This is because light in such a wavelength range yields the highest contrast of optical density depending on the presence or absence of the reaction substance. As the light sources 140, for example, light sources such as light emitting diodes (LEDs), organic electro luminescence (EL) devices, or semiconductor lasers are used. The irradiation light L0 limited to a specific wavelength range may be generated by combining a light source that emits light in a relatively broad wavelength range, such as a white light source, and a band-pass filter that transmits only light in the specific wavelength range. Although two light sources 140 are illustrated in the present example, three or more light sources 140 may be provided as necessary.

For example, when the reaction region A of the analysis chip 10 is irradiated with the irradiation light L0 from the light sources 140, a part of the irradiation light L0 is absorbed in the reaction region A. Specifically, in the reaction region A, a reaction substance that develops a specific color is generated by the reaction between the reagent R and the test target substance. A part of the irradiation light L0 incident on the reaction region A is absorbed by the reaction substance. Further, a part of the irradiation light L0 incident on the reaction region A is reflected in the reaction region A and output from the opening 17D.

The photodetector 150 detects reflected light Lr from the reaction region A generated when the reaction region A of the analysis chip 10 is irradiated with the irradiation light L0, and outputs a reflected light amount value corresponding to the light amount of the reflected light Lr. The photodetector 150 includes at least one light-receiving element, and outputs an electric signal corresponding to the light amount of the reflected light Lr received by the light-receiving element as the reflected light amount value.

The photodetector 150 may be an image sensor or a light-receiving element itself such as a photodiode. The image sensor is a complementary metal oxide semiconductor (CMOS) image sensor, a charge coupled device (CCD) image sensor, or the like. In the present embodiment, a case where the photodetector 150 is an image sensor will be described.

The image sensor has a light-receiving surface on which a plurality of light-receiving elements are arranged at least one dimensionally, preferably two dimensionally. In the image sensor, electric charge generated when the light-receiving elements receive light is accumulated. The image sensor outputs an electric signal which is an analog signal corresponding to the amount of accumulated electric charge. An analog signal corresponding to the light amount of the reflected light Lr is output from the photodetector 150. When an image sensor with a built-in AD converter is used, a digital signal corresponding to the light amount of the reflected light Lr is output from the photodetector 150.

The AD converter 156 has a function of converting an analog signal into a digital signal and outputting the digital signal. The AD converter 156 performs AD conversion on the analog signal corresponding to the light amount of the reflected light Lr input from the photodetector 150, and outputs the result as a digital signal corresponding to the light amount. The AD converter 156 has a function of converting a reflected light amount value into a gradation value within a predetermined gradation range. For example, when the AD converter is an 8-bit converter, the reflected light amount value output as an analog signal from the photodetector 150 is converted into a numerical value that is a gradation value in a gradation range of 0 to 255. For example, the AD converter 156 is configured to assign a maximum value QAmax of the input analog signal to a digital signal value (for example, 250) that is a gradation value in the vicinity of the upper limit value of the gradation range (0 to 255). The gradation value in the vicinity of the upper limit value is not limited to 250, and may be 251, 252, or the like. The gradation value in the vicinity of the upper limit value is preferably a gradation value of 90% or more of the upper limit value of the gradation range. Hereinafter, the upper limit value of the gradation range includes a gradation value in the vicinity of the upper limit value of the gradation range. The digital signal value output by AD conversion performed by the AD converter 156 on the analog signal value input from the photodetector 150 is a relative light amount value with respect to the maximum value QAmax of the analog signal. The maximum value QAmax of the analog signal input to the AD converter 156 coincides with the maximum light amount value output from the photodetector 150. Hereinafter, the maximum light amount value output from the photodetector 150 is referred to as the maximum light amount value QAmax.

The processor 170 derives the concentration of a test target substance based on a reflected light amount value. For example, the processor 170 includes a central processing unit (CPU), and, by executing a program, executes a process of detecting reflected light, converting the reflected light amount value into a relative light amount value that is a gradation value within a predetermined gradation range, deriving optical density of a reaction region from the relative light amount value, and deriving the concentration of a test target substance based on the optical density, in accordance with a predetermined derivation condition. In the process of deriving the concentration of the test target substance, the processor 170 selectively applies either a first derivation condition determined by using the first optical density plate 122 or a second derivation condition determined by using the second optical density plate 124 as the derivation condition. The processor 170 integrally controls each unit of the measurement unit 120. For example, the memory 175 stores a program and a calibration curve.

The above-described AD conversion in which the AD converter 156 converts an analog reflected light amount value into a digital signal corresponds to a process of converting the reflected light amount value into a relative light amount value that is a gradation value within a predetermined gradation range.

In the reaction region A of the analysis chip 10, the test substance sample 20 and the reagent R react with each other and a reaction substance that develops a specific color is generated. The generation of the reaction substance results in a change in the color of the reaction region A. This change in the color is manifested as a change in the optical density of the reaction region A. That is, the reflected light Lr from the reaction region A irradiated with the irradiation light L0 is light corresponding to the optical density of the reaction region A, and information on the reaction substance is reflected in the reflected light Lr. The optical density of the reaction region A changes according to the amount of reaction substance, and the amount of reaction substance represents the concentration of the test target substance in the test substance sample 20. Therefore, it is possible to derive the concentration of the test target substance, based on the light amount value (reflected light amount value) of the reflected light Lr including the information on the reaction substance.

In the present example, the processor 170 derives the optical density from the reflected light amount value, and derives the concentration of the test target substance based on a calibration curve indicating the relationship between the optical density and the concentration of the test target substance.

The first optical density plate 122 and the second optical density plate 124 both have known optical density, and are used to acquire the first derivation condition and the second derivation condition, respectively. For example, the first optical density plate 122 is a white optical density plate having first optical density of 0 to 0.5. For example, the second optical density plate 124 is a gray optical density plate having second optical density of 0.8 to 1.5. Hereinafter, the first optical density plate 122 is referred to as a white plate 122, and the second optical density plate 124 is referred to as a gray plate 124. The optical density of the gray plate 124 is preferably 1 to 1.5. Reflectivity of 100% corresponds to optical density of 0, and reflectivity of 10% corresponds to optical density of 1. Since the relationship between optical density and reflectivity is optical density = log₁₀(1/reflectivity), deriving the reflectivity and deriving the optical density have the same meaning. Hereinafter, the correlation between a reflected light amount value and optical density will be described as the correlation between a reflected light amount value and reflectivity.

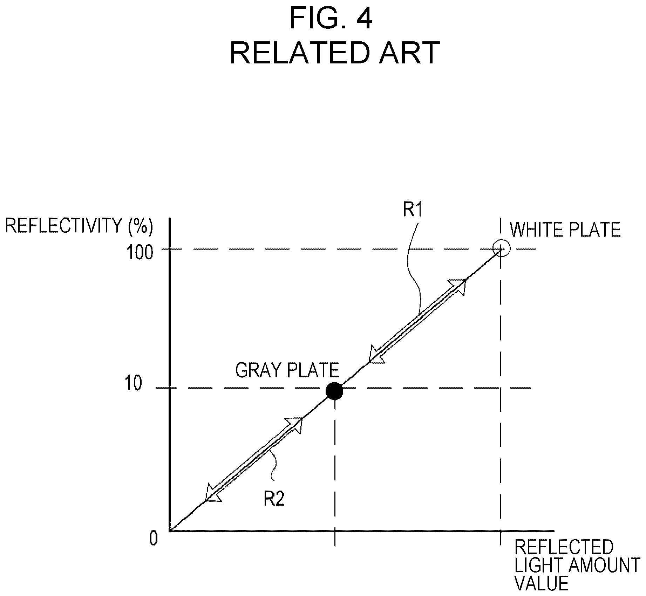

Problems in a conventional analysis apparatus will be described. Fig. 4 is a graph illustrating the relationship between reflectivity and a reflected light amount value output according to the light amount of reflected light received by the photodetector 150 when detection is performed under the same detection condition. When detection is performed under the same detection condition, the light amount of reflected light from the reaction region A varies depending on the type of a reaction substance generated after reaction between a test target substance and a reagent. In the case of an analysis chip in which the optical density is relatively low (reflectivity is relatively high) in the reaction region A where color is developed by a reaction substance generated after reaction between a test target substance and a reagent, for example, a relatively high reflected light amount value in a range indicated by double-headed arrow R1 in Fig. 4 is detected. On the other hand, in the case of an analysis chip in which the optical density is relatively high (reflectivity is relatively low) in the reaction region A where color is developed by a reaction substance generated after reaction between a test target substance and a reagent, for example, a relatively low reflected light amount value as indicated by double-headed arrow R2 in Fig. 4 is detected. In the conventional analysis apparatus, reflectivity has been derived for all analysis chips 10 from the correlation illustrated in Fig. 4. However, when the correlation in Fig. 4 is used, there is a problem that the resolution in reflectivity derivation when the amount of reflected light to be detected is small is low. There is also a problem that noise is large and a signal-to-noise ratio (S/N) is low when the amount of reflected light to be detected is small. The low resolution and low S/N are the causes of a decrease in the accuracy of detecting the test target substance.

In the present embodiment, the processor 170 is configured to selectively apply either the first derivation condition determined by using the white plate 122 and the second derivation condition determined by using the gray plate 124 as the derivation condition in the process of deriving the concentration of the test target substance, thereby suppressing a decrease in the accuracy of detecting the test target substance.

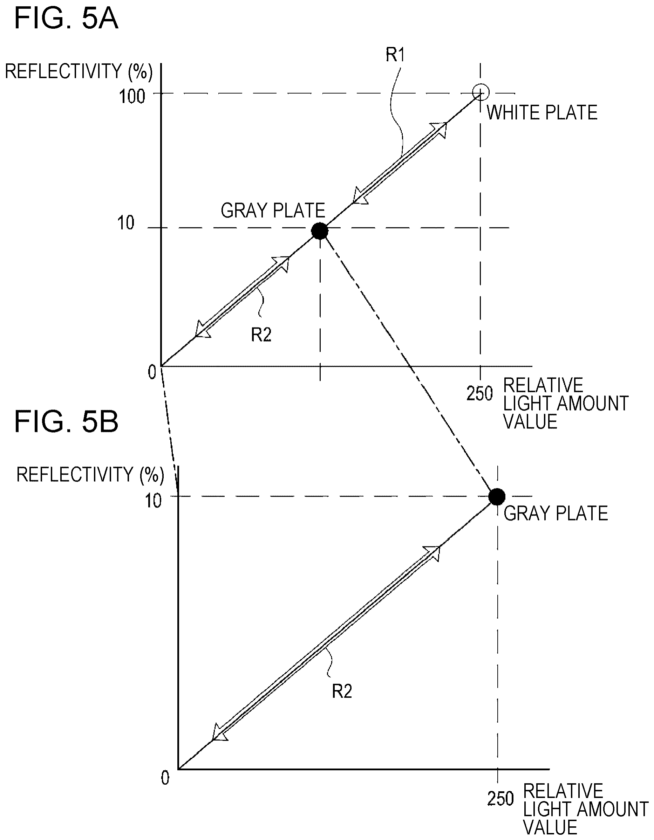

Fig. 5A is a diagram illustrating the correlation between a relative light amount value and reflectivity defined from the relationship between the relative light amount value acquired for the white plate 122 and optical density (reflectivity) of the white plate 122. When the first derivation condition is used in the process of deriving the concentration of a test target substance using the analysis chip 10, the processor 170 detects reflected light by using a detection condition of reflected light from the white plate 122, derives the optical density from the correlation between the relative light amount value and the reflectivity illustrated in Fig. 5A, and derives the concentration of the test target substance. The first derivation condition includes a detection condition in acquiring the correlation between the relative light amount value acquired for the white plate 122 and the reflectivity (Fig. 5A), and a conversion condition in converting a reflected light amount value into a relative light amount value.

Fig. 5B is a diagram illustrating the correlation between a relative light amount value and reflectivity defined from the relationship between the relative light amount value acquired for the gray plate 124 and optical density (reflectivity) of the gray plate 124. When the second derivation condition is used in the process of deriving the concentration of a test target substance using the analysis chip 10, the processor 170 detects reflected light by using a detection condition of reflected light from the gray plate 124, derives the optical density from the correlation between the relative light amount value and the reflectivity illustrated in Fig. 5B, and derives the concentration of the test target substance. The second derivation condition includes a detection condition in acquiring the correlation between the relative light amount value acquired for the gray plate 124 and the reflectivity (Fig. 5B), and a conversion condition in converting a reflected light amount value into a relative light amount value.

As an example, Fig. 5A and Fig. 5B illustrate a case where the optical density of the white plate 122 is 0 (that is, reflectivity is 100%) and the optical density of the gray plate 124 is 1 (that is, reflectivity is 10%). In Fig. 5A and Fig. 5B, the lateral axis represents the relative light amount value output from the AD converter 156. In Fig. 5A, the reflected light amount value from the white plate 122 is a numerical value (in this case, 250 as an example) close to the upper limit of the gradation range of 8 bits (0 to 255). In Fig. 5B, the reflected light amount value from the gray plate 124 is a numerical value (in this case, 250 as an example) close to the upper limit of the gradation range of 0 to 255. As described above, the second derivation condition is a condition in which the relative light amount value for the gray plate 124 is the upper limit of the gradation range. The resolution of the relative light amount value can be improved by acquiring the relative light amount value in accordance with the second derivation condition at the time of measurement on the analysis chip 10 that has the low relative light amount value (that is, high optical density) as indicated by the double-headed arrow R2 in accordance with the first derivation condition in which the relative light amount value for the white plate 122 is the upper limit of the gradation range.

A derivation process of deriving the concentration of a test target substance in the analysis apparatus 100 of the present embodiment will be described. The derivation process includes a process of detecting reflected light, a process of deriving the optical density from the reflected light, and a process of deriving the concentration of a test target substance from the optical density.

For example, the first derivation condition and the second derivation condition including the correlation between the relative light amount value and the reflectivity illustrated in Fig. 5A and Fig. 5B are acquired at the time of start-up of the analysis apparatus 100, at the time of return from a sleep state, or the like. Therefore, for example, when the analysis apparatus 100 is powered on, a derivation condition acquisition process is executed. The derivation condition acquisition process in the present embodiment will be described.

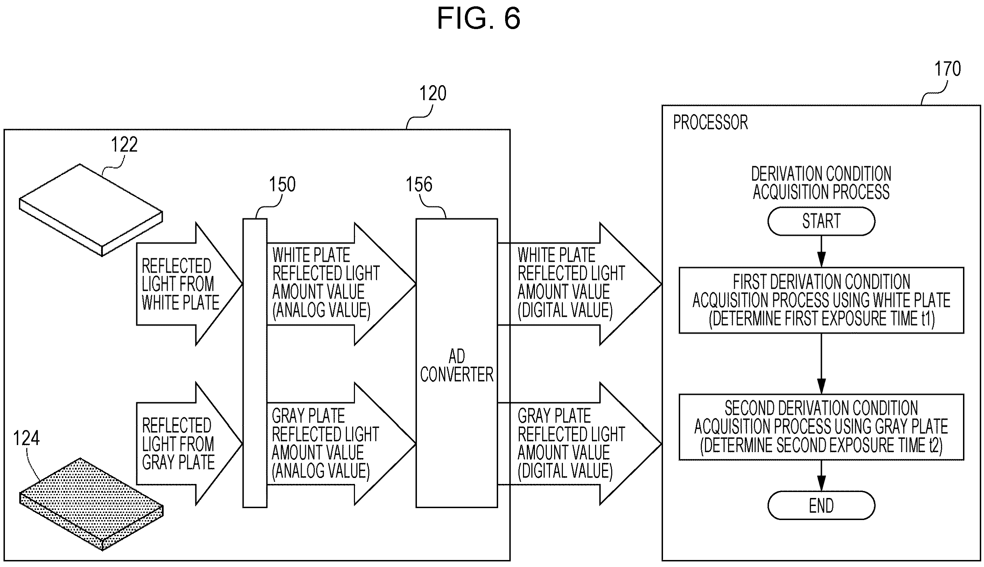

As illustrated in Fig. 6, the derivation condition acquisition process executed by the processor 170 includes a first derivation condition acquisition step of acquiring the first derivation condition using the white plate 122 and a second derivation condition acquisition step of acquiring the second derivation condition using the gray plate 124.

The first derivation condition is acquired as follows.

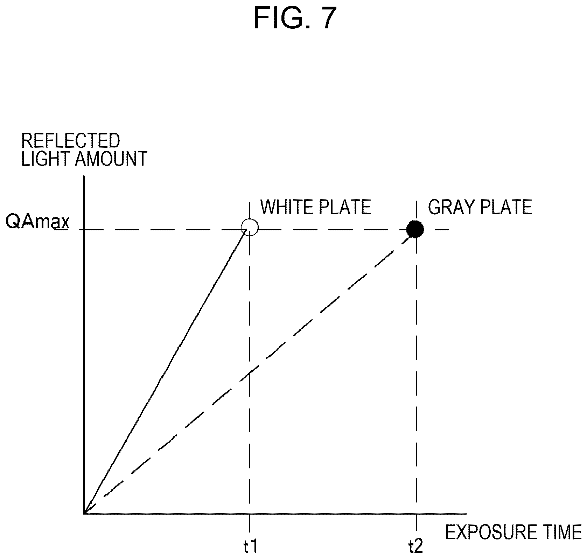

The processor 170 determines first exposure time t1 at which the reflected light amount value output from the photodetector 150 according to the reflected light from the white plate 122 is the maximum light amount value QAmax corresponding to the saturation value of the amount of electric charge accumulated in the photodetector 150 formed of an image sensor (see Fig. 7). In the image sensor, electric charge generated when the light-receiving element receives light is accumulated, and the amount of accumulated electric charge is output as a light amount value. However, the amount of accumulated electric charge has an upper limit, and electric charge generated beyond the upper limit value cannot be accumulated, resulting in saturation. The first exposure time t1 is time until the amount of electric charge accumulated by the reflected light from the white plate 122 reaches a saturation value but may be time until the amount of electric charge reaches a predetermined value lower than the saturation value. However, from the viewpoint of widening the dynamic range, the predetermined value is preferably in a range from the saturation value to about -10% of the saturation value, and is preferably as close to the saturation value as possible.

The white plate 122 is loaded in the loading unit 130, and a reflected light amount for the white plate 122 is measured. In the measurement unit 120, the white plate 122 is irradiated with the irradiation light L0 from the light sources 140, and the white plate 122 generates reflected light in a light amount corresponding to the optical density thereof (see Fig. 6). The reflected light from the white plate 122 is detected by the photodetector 150. The photodetector 150 outputs a white plate reflected light amount value that is an analog value such as a voltage corresponding to the light amount of the reflected light from the white plate 122. The white plate reflected light amount value that is an analog value is converted by the AD converter 156 into a white plate reflected light amount value that is a digital value. The white plate reflected light amount value that is a digital value is a relative light amount value with respect to the maximum light amount value QAmax. The exposure time at which the relative light amount value is in the vicinity of the upper limit value of the gradation range corresponds to the first exposure time t1 at which the reflected light amount is the maximum light amount value QAmax. Therefore, for example, a process of detecting the relative light amount value for the white plate 122 at a plurality of different exposure times is performed to determine the first exposure time t1 at which the relative light amount value is in the vicinity of the upper limit value of the gradation range. The correlation between the relative light amount value and the reflectivity (Fig. 5A) is obtained by associating the relative light amount value obtained by detecting the reflected light from the white plate 122 under the measurement condition of the first exposure time t1 with the known reflectivity of the white plate 122 (in this case, 100%). In this way, the first derivation condition including the first exposure time t1 and the correlation illustrated in Fig. 5A is acquired. The determined first exposure time t1 and the correlation illustrated in Fig. 5A are stored in the memory 175 as the first derivation condition.

Similarly, the second derivation condition is acquired as follows.

The processor 170 determines second exposure time t2 at which the reflected light amount value output from the photodetector 150 according to the reflected light from the gray plate 124 is the maximum light amount value QAmax corresponding to the upper limit of the amount of electric charge accumulated in the photodetector 150 formed of an image sensor (see Fig. 7). The second exposure time t2 is time until the amount of electric charge accumulated by the reflected light from the gray plate 124 reaches a saturation value but may be time until the amount of electric charge reaches a predetermined value lower than the saturation value. However, also in this case, from the viewpoint of widening the dynamic range, the predetermined value is preferably in a range from the saturation value to about -10% of the saturation value, and is preferably as close to the saturation value as possible.

Instead of the white plate 122, the gray plate 124 is loaded in the loading unit 130, and a reflected light amount for the gray plate 124 is measured. In the measurement unit 120, the gray plate 124 is irradiated with the irradiation light L0 from the light sources 140, and reflected light in a light amount corresponding to the optical density is generated from the gray plate 124 (see Fig. 6). The reflected light from the gray plate 124 is detected by the photodetector 150. The photodetector 150 outputs a gray plate reflected light amount value that is an analog value such as a voltage corresponding to the light amount of the reflected light from the gray plate 124. The gray plate reflected light amount value that is an analog value is converted by the AD converter 156 into a gray plate reflected light amount value that is a digital value. The gray plate reflected light amount value that is a digital value is a relative light amount value with respect to the maximum light amount value QAmax. The exposure time at which the relative light amount value is in the vicinity of the upper limit value of the gradation range corresponds to the second exposure time t2 at which the reflected light amount is the maximum light amount value QAmax. Therefore, for example, a process of detecting the relative light amount value for the gray plate 124 at a plurality of different exposure times is performed to determine the second exposure time t2 at which the relative light amount value is in the vicinity of the upper limit value of the gradation range. The correlation between the relative light amount value and the reflectivity (Fig. 5B) is obtained by associating the relative light amount value obtained by detecting the reflected light from the gray plate 124 under the measurement condition of the second exposure time t2 with the known reflectivity of the gray plate 124 (in this case, 10%). In this way, the second derivation condition including the second exposure time t2 and the correlation illustrated in Fig. 5B is acquired. The determined second exposure time t2 and the correlation illustrated in Fig. 5B are stored in the memory 175 as the second derivation condition.

In the analysis apparatus 100, the first derivation condition and the second derivation condition are acquired as described above.

The processor 170 controls each unit of the measurement unit 120 and executes a measurement process for the analysis chip 10. The measurement process for the analysis chip 10 is a process of deriving the concentration of a test target substance that reacts with a reagent of the analysis chip 10. As described above, the processor 170 is configured to execute a process of detecting reflected light, converting the reflected light amount value into a relative light amount value that is a gradation value within a predetermined gradation range, deriving the optical density of a reaction region from the relative light amount value, and deriving the concentration of a test target substance based on the optical density, in accordance with a predetermined derivation condition. In the process of deriving the concentration of the test target substance, the processor 170 is configured to selectively apply either the first derivation condition determined by using the first optical density plate 122 or the second derivation condition determined by using the second optical density plate 124 as the derivation condition.

Preferably, the processor 170 is configured to selectively apply either the first derivation condition or the second derivation condition based on a preset condition. In the present embodiment, as described above, the exposure time for detecting the reflected light from the analysis chip 10 is different between the first derivation condition and the second derivation condition. When the first derivation condition is used, measurement on the analysis chip 10 is performed under the measurement condition of the first exposure time t1, and the processor 170 derives the reflectivity based on the correlation between the relative light amount value and the reflectivity acquired by using the white plate 122 (Fig. 5A). When the second derivation condition is used, measurement on the analysis chip 10 is performed under the measurement condition of the second exposure time t2 longer than the first exposure time t1, and the processor 170 derives the reflectivity based on the correlation between the relative light amount value and the reflectivity acquired by using the gray plate 124 (Fig. 5B).

As described above, the reagent varies depending on the measurement item. Depending on the type of the reagent R and the type of the test target substance, the reaction substance generated after the reaction varies, and the optical density of the reaction region A varies depending on the generated reaction substance. Therefore, the processor 170 uses the white plate 122 at the time of measurement on the analysis chip 10 in which the optical density of the reaction region A after the reaction is relatively low and the reflected light amount is large. On the other hand, the processor 170 preferably uses the gray plate 124 at the time of measurement on the analysis chip 10 in which the optical density of the reaction region A after the reaction is relatively high and the reflected light amount is small. An example of the preset condition is the type of the analysis chip 10. The processor 170 is preferably configured to use the second derivation condition when the analysis chip 10 is the analysis chip 10 including a specific reagent, and use the first derivation condition in the other cases.

For example, the analysis chip 10 including a specific reagent is an analysis chip in which the optical density of the reaction region A exceeds a preset threshold value due to a reaction substance generated after a test target substance reacts with the specific reagent. The threshold value may be set as appropriate, but is optical density equal to or higher than the optical density of the gray plate 124. For example, when the optical density of the gray plate 124 is 1, the threshold value is set to a value equal to or larger than 1 (for example, 1.2).

An example of the analysis chip 10 for which the gray plate 124 is used an analysis chip including a reagent that reacts with calcium (Ca) and generates a reaction substance (hereinafter, referred to as an analysis chip for Ca detection).

It is preferable to set in advance whether to use the first derivation condition or the second derivation condition in each measurement for a plurality of types of analysis chips 10. In this case, a correspondence table between the type of the analysis chip 10 and the derivation condition to be selected may be stored in the memory 175.

For example, the analysis apparatus 100 includes an information reader (not illustrated) that reads the information code 17E given to the analysis chip 10 before the loading unit 130 is loaded with the analysis chip 10. The processor 170 reads the information code 17E of the analysis chip 10 by the information reader and recognizes the type of the analysis chip 10. The processor 170 selects the first derivation condition or the second derivation condition as the derivation condition corresponding to the type of the analysis chip 10 with reference to the correspondence table.

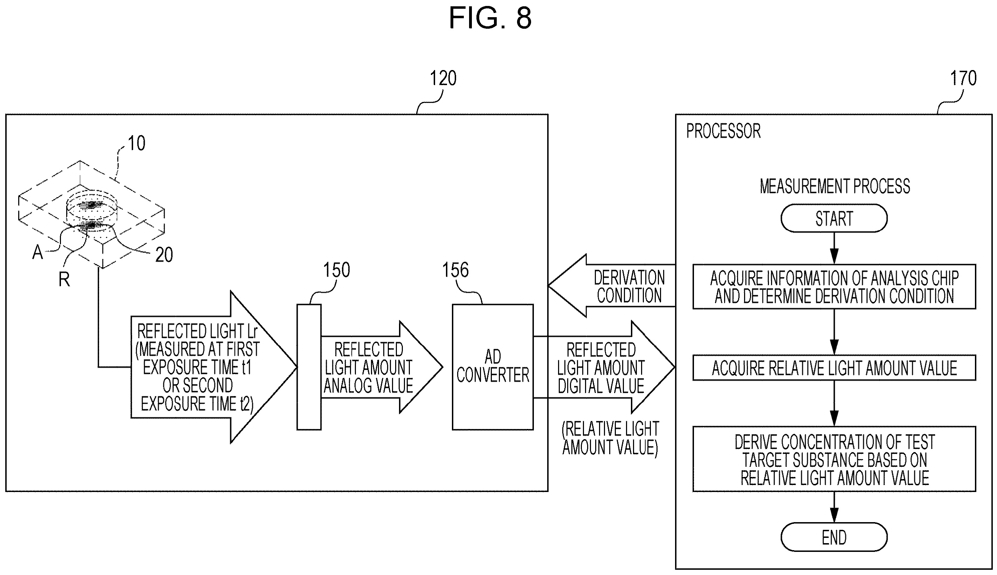

The measurement process on the analysis chip 10 will be described with reference to Fig. 8.

First, the test substance sample 20 is dropped on the reaction region A of the analysis chip 10 by the dispensing mechanism 110 (see Fig. 1). Thereafter, the analysis chip 10 on which the test substance sample 20 has been dropped is loaded in the measurement unit 120. The information code 17E is read by the information reader that reads the information code 17E given to the analysis chip 10 before the analysis chip 10 is loaded in the measurement unit 120. The processor 170 identifies the type of the analysis chip 10 from the information code 17E read by the information reader. Thus, the processor 170 selects one of the first derivation condition and the second derivation condition according to the type of the analysis chip 10.

The processor 170 controls the measurement unit 120 so that reflected light is detected under the measurement condition of the exposure time of the selected derivation condition. That is, the processor 170 executes the process such that the reflected light amount of the analysis chip 10 is measured under the measurement condition of the first exposure time t1 when the first derivation condition is selected, and the reflected light amount of the analysis chip 10 is measured under the measurement condition of the second exposure time t2 when the second derivation condition is selected.

After the analysis chip 10 is loaded in the measurement unit 120, a reflected light amount value for the analysis chip 10 is detected under the measurement condition of the first exposure time t1 or the second exposure time t2. First, the analysis chip 10 is irradiated with the irradiation light L0 from the light sources 140. When the analysis chip 10 is irradiated with the irradiation light L0, the reflected light Lr reflecting information of a reaction substance generated by reaction between the test substance sample 20 and the regent R is generated from the reaction region A of the analysis chip 10. The photodetector 150 detects the reflected light Lr and outputs a reflected light amount value that is an analog value corresponding to the light amount of the reflected light Lr. The reflected light amount value that is an analog value is converted into a digital value by the AD converter 156, and the digital signal value is output as a relative light amount value corresponding to the light amount of the reflected light Lr. The processor 170 acquires the relative light amount value from the AD converter 156.

As described above, in the analysis apparatus 100, the processor 170 executes the step of using the analysis chip 10 having the reaction region A having the reagent R reacting with a test target substance, detecting the reflected light Lr under the measurement condition of the exposure time corresponding to the selected optical density plate, and acquiring the relative light amount value corresponding to the light amount of the reflected light.

Thereafter, the processor 170 derives the concentration of the test target substance based on the relative light amount value. Specifically, when the first derivation condition is selected, the processor 170 derives the reflectivity of the analysis chip 10 from the acquired relative light amount value by referring to the correlation illustrated in Fig. 5A, and derives the concentration of the test target substance by referring to the calibration curve stored in the memory 175 and indicating the relationship between the reflectivity and the concentration of the test target substance. When the second derivation condition is selected, the processor 170 derives the reflectivity of the analysis chip 10 from the acquired relative light amount value by referring to the correlation illustrated in Fig. 5B, and derives the concentration of the test target substance by referring to the calibration curve stored in the memory 175 and indicating the relationship between the reflectivity and the concentration of the test target substance.

Thus, the process of measuring the concentration of the test target substance included in the test substance sample 20 ends.

As described above, in the analysis apparatus 100, in the measurement process on the analysis chip 10, that is, in the process of deriving the concentration of a test target substance, the first derivation condition determined using the first optical density plate (in this case, white plate) 122 and the second derivation condition determined using the second optical density plate (in this case, gray plate) 124 are selectively used as the derivation condition. By selecting and using the second derivation condition when the optical density of the reaction region A is high (that is, when the reflected light amount is small), the resolution can be improved for the analysis chip 10 in which the optical density of the reaction region A is high, and a decrease in the accuracy of detecting the concentration of the test target substance can be suppressed.

In the analysis apparatus 100, the first derivation condition and the second derivation condition are different in exposure time at the time of detection of reflected light, and the second exposure time t2 in the second derivation condition is longer than the first exposure time t1. Since this can increase the amount of reflected light from the gray plate 124 received by the photodetector 150, S/N of the reflected light amount value for the analysis chip 10 having high optical density can be improved. As a method of increasing the reflected light amount value for the analysis chip 10 having high optical density, it is conceivable that the diaphragm opening is enlarged instead of increasing the exposure time. However, this requires insertion of mechanical means. In the present embodiment, since the reflected light amount value can be increased by changing the exposure time, S/N can be easily improved.

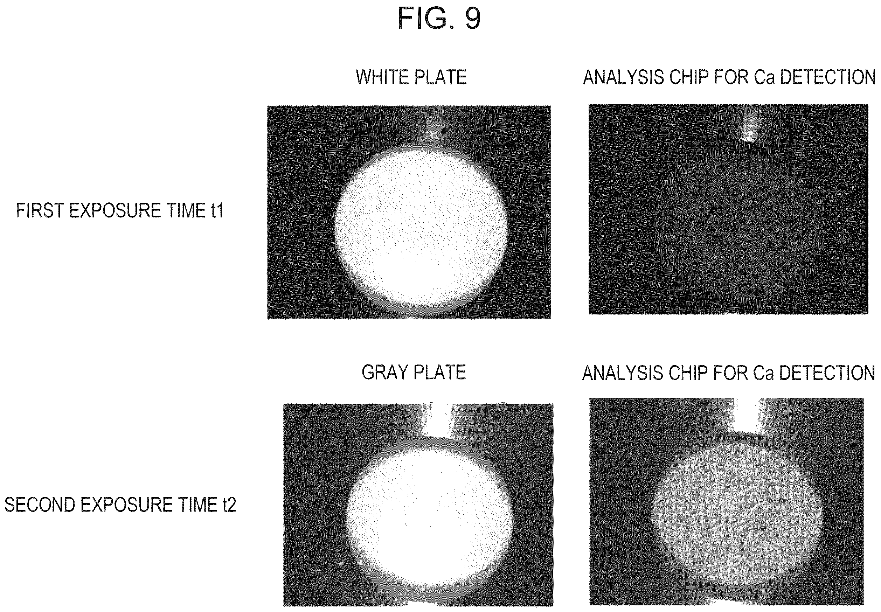

Fig. 9 illustrates the white plate and the reaction region of the analysis chip for Ca detection photographed at the first exposure time t1, and the gray plate and the reaction region of the analysis chip for Ca detection photographed at the second exposure time t2. The reaction region of the analysis chip for Ca detection photographed at the first exposure time t1 can be hardly recognized. It can be seen that the reaction region of the analysis chip for Ca detection photographed at the second exposure time t2 is brighter than that photographed at the first exposure time t1 and can be recognized.

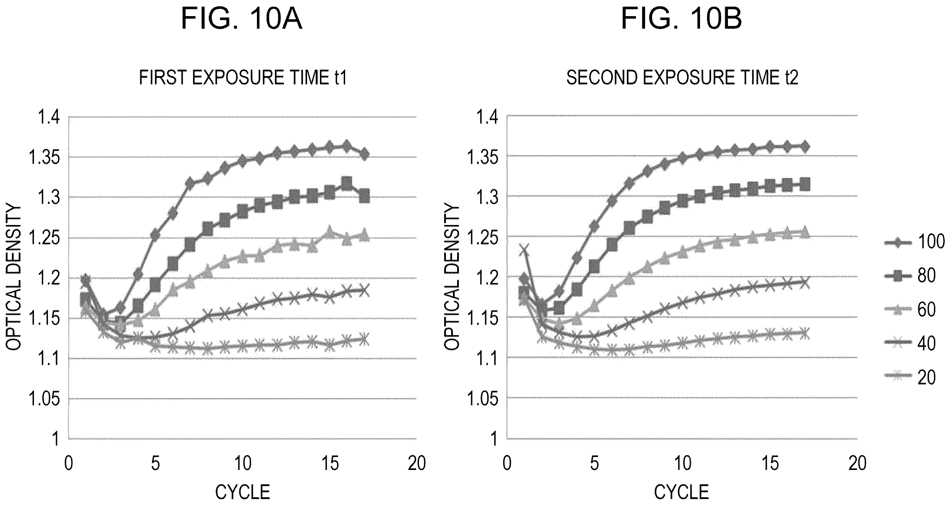

Fig. 10A and Fig. 10B illustrate graphs obtained by dropping each of test substances having different calcium concentrations on the analysis chip for Ca detection and detecting a change in optical density with time. In the legend commonly indicated for Fig. 10A and Fig. 10B, 100, 80, 60, 40, and 20 indicate Ca concentration values in the test substances. The Ca concentration values are indicated as relative values with the calcium concentration of the test substance having the highest calcium concentration among the plurality of test substances set to 100. "cycle" indicated by the lateral axis in each graph indicates the number of times of measurement performed intermittently, and is a parameter corresponding to time. Fig. 10A illustrates a change in optical density with time when the exposure time at the time of measurement in each measurement is the first exposure time t1. Fig. 10B illustrates a change in optical density with time when the exposure time at the time of measurement in each measurement is the second exposure time t2.

In Fig. 10A, the curved lines indicating a change in optical density with time are slightly wavy. This indicates that noise is large and S/N is poor. In contrast, in Fig. 10B, the curved lines indicating a change in optical density with time are smooth, and it is apparent that S/N is improved as compared with the measured values of Fig. 10A.

The analysis apparatus 100 may include an optical density plate having different optical density other than the white plate 122 and the gray plate 124, and the processor 170 may be configured to selectively use one of three or more derivation conditions at the time of measurement.

While the light amount value set as the lower limit value used when a reflected light amount value is converted into a relative light amount value (gradation range) is defined as 0 (see Fig. 5A and Fig. 5B), the analysis apparatus 100 may further include a black plate in order to acquire the light amount value to be assigned to the lower limit value of the gradation range. The black plate is an optical density plate having optical density of 2 or more, and preferably has optical density of 3 to 4. By setting the light amount value to be assigned to the lower limit value of the relative light amount value to the reflected light amount value from the black plate, reflectivity can be derived with higher accuracy, and the accuracy of detecting a test target substance can be improved.

As in the analysis apparatus 100, when the processor 170 is configured to selectively apply either the first derivation condition or the second derivation condition based on a preset condition, the concentration of a test target substance can be derived by automatically selecting an appropriate derivation condition based on the preset condition. In particular, it is preferably configured such that the first derivation condition and the second derivation condition are selectively applied based on the type of the analysis chip 10, and it is preferably configured such that the processor 170 uses the second derivation condition when the analysis chip 10 is an analysis chip including the specific reagent R. The accuracy of detecting the concentration of a test target substance can be improved for the analysis chip 10 in which the optical density of the reaction region A after reaction between the specific reagent R and the test target substance is larger than the optical density of the gray plate 124.

### Second Embodiment

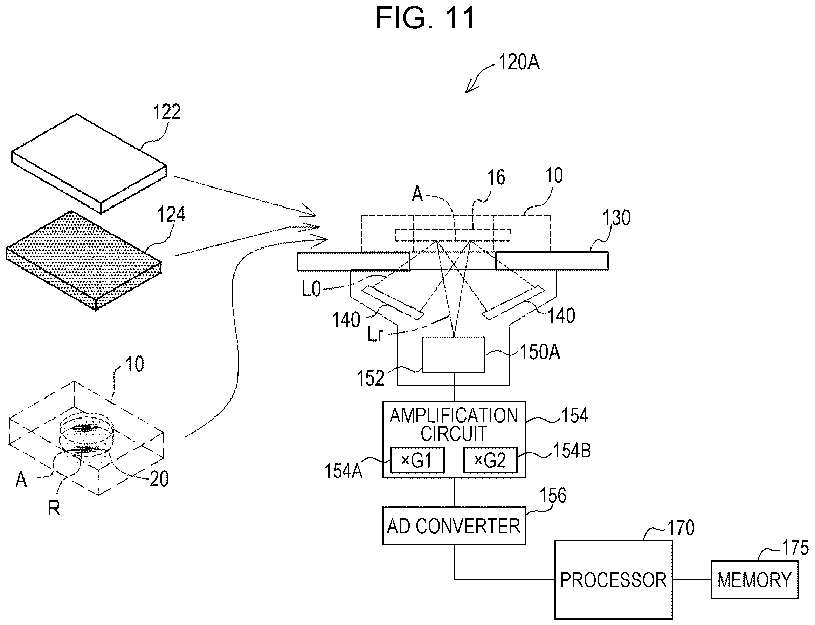

The schematic configuration of an analysis apparatus of a second embodiment is substantially the same as that of the analysis apparatus 100 of the first embodiment (see Fig. 1). Fig. 11 illustrates a measurement unit 120A of the second embodiment. In Fig. 11, the same components as those illustrated in Fig. 3 are denoted by the same reference signs, and detailed description thereof will be omitted.

In the first embodiment, the photodetector 150 of the measurement unit 120 is an image sensor, whereas in the second embodiment, a photodetector 150A of the measurement unit 120A is constituted by a light-receiving element 152 itself such as a photodiode. The measurement unit 120A includes an amplification circuit 154 between the photodetector 150A (i.e., the light-receiving element 152) and the AD converter 156.

In the first embodiment, the image sensor used as the photodetector 150 generally includes an amplification circuit, but its amplification factor is single and fixed. In contrast, the amplification circuit 154 in the second embodiment can switch between a first amplification factor G1 and a second amplification factor G2. That is, the amplification circuit 154 includes a first amplification circuit 154A and a second amplification circuit 154B. The first amplification circuit 154A amplifies a primary reflected light amount value QL output from the light-receiving element 152 with the first amplification factor G1 and outputs the amplified value as a secondary reflected light amount value QL·G1. The second amplification circuit 154B amplifies the primary reflected light amount value QL output from the light-receiving element 152 with the second amplification factor G2 and outputs the amplified value as a secondary reflected light amount value QL·G2. In the second embodiment, the first amplification circuit 154A and the second amplification circuit 154B are selectively used at the time of measurement on the analysis chip 10.

That is, while the case where the exposure time is different between the first derivation condition and the second derivation condition has been described in the first embodiment, in the second embodiment, the exposure condition is the same but the amplification factor with respect to the reflected light amount is different between the first derivation condition and the second derivation condition. In the present embodiment, the first amplification factor G1 is selected in the first derivation condition, and the second amplification factor G2 is selected in the second derivation condition.

As described in the first embodiment, the AD converter 156 has a function of converting an analog signal into a digital signal and outputting the digital signal. The AD converter 156 performs AD conversion on an analog signal corresponding to the light amount of the reflected light Lr input from the photodetector 150, and outputs the signal as a digital signal value D corresponding to the light amount. The AD converter 156 has a function of converting a reflected light amount value into a gradation value within a predetermined gradation range. For example, when the AD converter is an 8-bit converter, the reflected light amount value output as an analog signal from the photodetector 150 is converted into a numerical value that is a gradation value in a gradation range of 0 to 255. For example, the AD converter 156 is configured to assign the maximum value of the input analog signal to the upper limit value (for example, 250) of the gradation range (0 to 255). As described above, the upper limit value of the gradation range means a gradation value in the vicinity of the upper limit value of the gradation range.

The first amplification factor G1 of the first amplification circuit 154A is an amplification factor at which a secondary reflected light amount value QL1·G1 obtained by amplifying a first reference reflected light amount value QL1, which is the primary reflected light amount value corresponding to the light amount of reflected light from the white plate 122, is equivalent to the maximum value of the analog signal assigned to the upper limit value of the gradation range defined by the AD converter 156.

The second amplification factor G2 of the second amplification circuit 154B is an amplification factor at which a secondary reflected light amount value QL2·G2 obtained by amplifying a second reference reflected light amount value QL2, which is the primary reflected light amount value corresponding to the light amount of reflected light from the gray plate 124, is equivalent to the maximum value of the analog signal assigned to a digital signal value that is a gradation value (hereinafter, upper limit value of the gradation range) in the vicinity of the upper limit value of the gradation range defined by the AD converter 156.

In other words, the first derivation condition and the second derivation condition are different in the light amount value assigned to the upper limit value of the gradation range when a reflected light amount value is converted into a relative light amount value. In this case, the light amount value in the second derivation condition is smaller than the light amount value in the first derivation condition.

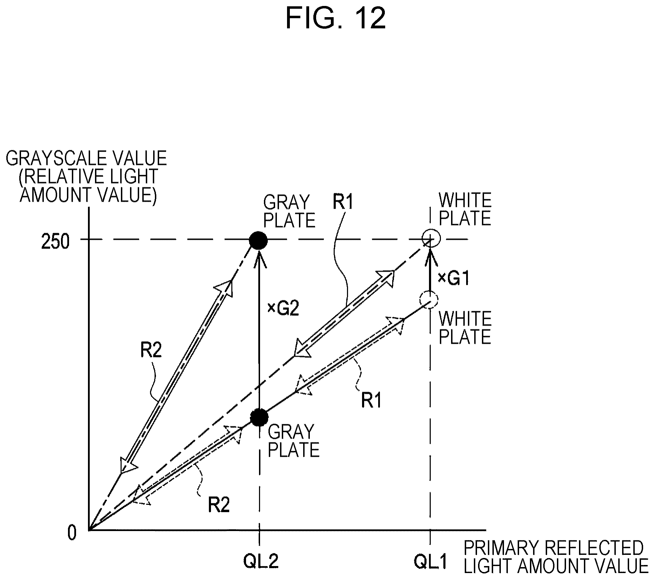

Fig. 12 is a graph illustrating the relationship between a primary reflected light amount value and a gradation value (that is, relative light amount value). The solid line indicates the relationship between the primary reflected light amount value and the gradation value when the primary reflected light amount value is not amplified and is converted by the AD converter 156. The broken line indicates the relationship between the primary reflected light amount value and the relative light amount value when the first reference reflected light amount value QL1 that is the primary reflected light amount value of the white plate 122 is assigned to the upper limit value (in this case, 250) of the gradation range due to the amplification effect of the first amplification circuit 154A. The alternate long and short dash line indicates the relationship between the primary reflected light amount value and the relative light amount value when the second reference reflected light amount value QL2 that is the primary reflected light amount value of the gray plate 124 is assigned to the upper limit value (in this case, 250) of the gradation range due to the amplification effect of the second amplification circuit 154B.

When the first derivation condition is used, the primary reflected light amount value of the analysis chip 10 is converted into a relative light amount value along the relationship indicated by the broken line in Fig. 12 in which the first reference reflected light amount value QL1 for the white plate 122 is defined as the upper limit value of the gradation range.

When the second derivation condition is used, the primary reflected light amount value of the analysis chip 10 is converted into a relative light amount value along the relationship indicated by the alternate long and short dash line in Fig. 12 in which the second reference reflected light amount value QL2 for the gray plate 124 is defined as the upper limit value of the gradation range.

The relative relationship between the relative light amount value and the reflectivity illustrated in Fig. 5A is obtained from the relationship between the relative light amount value for which the first reference reflected light amount value QL1 of the white plate 122 indicated by the broken line in Fig. 12 is defined as the upper limit of the gradation range and the optical density of the white plate 122. Similarly, the relative relationship between the relative light amount value and the reflectivity illustrated in Fig. 5B is obtained from the relationship between the relative light amount value for which the second reference reflected light amount value QL2 of the gray plate 124 indicated by the alternate long and short dash line in Fig. 12 is defined as the upper limit of the gradation range and the optical density of the gray plate 124.

When the first derivation condition is used, the processor 170 derives the reflectivity based on the correlation between the relative light amount value and the reflectivity acquired by using the white plate 122 (Fig. 5A). When the second derivation condition is used, the processor 170 derives the reflectivity based on the correlation between the relative light amount value and the reflectivity acquired by using the gray plate 124 (Fig. 5B).

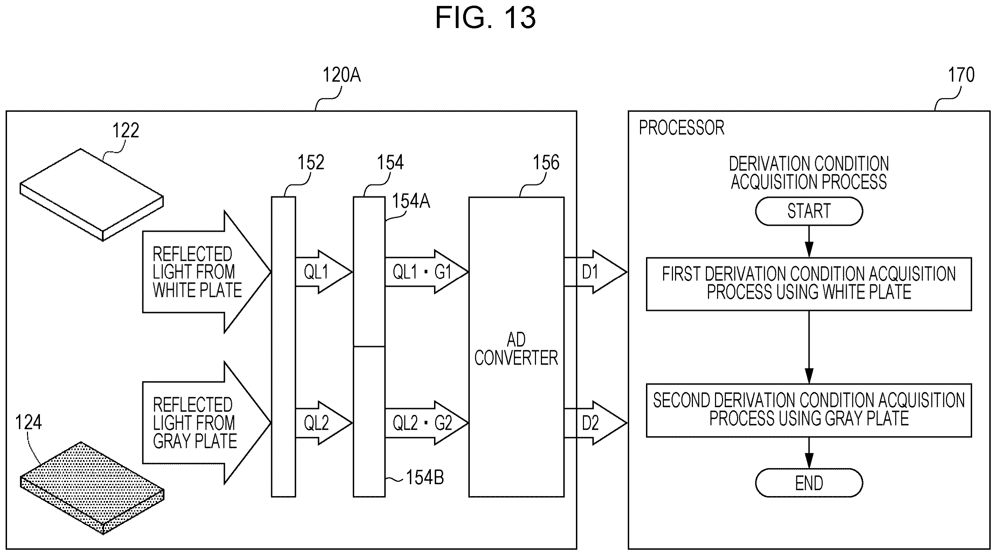

A derivation condition acquisition process in the second embodiment will be described. As illustrated in Fig. 13, the derivation condition acquisition process in the second embodiment includes a first derivation condition acquisition step of acquiring the first derivation condition using the white plate 122 and a second derivation condition acquisition step of acquiring the second derivation condition using the gray plate 124. This is similar to the case of the first embodiment described with reference to Fig. 6. However, the procedure in each step is different.

The first derivation condition is acquired as follows.

The white plate 122 is loaded in the loading unit 130, and a reflected light amount for the white plate 122 is measured. At this time, the processor 170 controls the measurement unit 120A such that the first amplification circuit 154A is selectively used in the amplification circuit 154. In the measurement unit 120A, the white plate 122 is irradiated with the irradiation light L0 from the light sources 140, and the white plate 122 generates reflected light in a light amount corresponding to the optical density (see Fig. 13). The reflected light from the white plate 122 is detected by the light-receiving element 152. The light-receiving element 152 outputs the first reference reflected light amount value QL1 that is the primary reflected light amount value corresponding to the light amount of the reflected light from the white plate 122. The first reference reflected light amount value QL1 that is the primary reflected light amount value is input to the amplification circuit 154, and is output as the secondary reflected light amount value QL1·G1 amplified by the first amplification circuit 154A with the first amplification factor G1. The value is converted into a relative light amount value D1 (for example, 250) that is a digital value by the AD converter 156. The processor 170 acquires the relationship between the primary reflected light amount value and the relative light amount value as indicated by the broken line in Fig. 12 from the relationship between the first reference reflected light amount value QL1 and the relative light amount value D1 for the white plate 122. In the first amplification circuit 154A, the first amplification factor G1 is set in advance. The first amplification factor G1 is set such that the relative light amount value D1 acquired according to the reflected light amount of the white plate 122 is a gradation value in the vicinity of the upper limit of the gradation range. However, the relative light amount value D1 corresponding to the first reference reflected light amount value QL1 that is the primary reflected light amount value from the white plate 122 may be slightly shifted due to environmental changes, aging, and the like of the white plate 122, the light sources 140, the light-receiving element 152, and the like.

The correlation between the relative light amount value and the reflectivity (Fig. 5A) is obtained by associating the relative light amount value D1 obtained for the white plate 122 with the known reflectivity of the white plate 122 (in this case, 100%).

As described above, the relationship between the first reference reflected light amount value QL1 and the corresponding relative light amount value D1, that is, the condition that the first reference reflected light amount value QL1 is amplified with the first amplification factor G1 and the correlation illustrated in Fig. 5A are acquired as the first derivation condition. The condition that the primary reflected light amount is amplified with the first amplification factor G1 and the correlation illustrated in Fig. 5A are stored in the memory 175 as the first derivation condition.

Similarly, the second derivation condition is acquired as follows.

Instead of the white plate 122, the gray plate 124 is loaded in the loading unit 130, and a reflected light amount for the gray plate 124 is measured. In the measurement unit 120, the gray plate 124 is irradiated with the irradiation light L0 from the light sources 140, and reflected light in a light amount corresponding to the optical density is generated from the gray plate 124 (see Fig. 13). The reflected light from the gray plate 124 is detected by the light-receiving element 152. The light-receiving element 152 outputs the second reference reflected light amount value QL2 that is the primary reflected light amount value corresponding to the light amount of the reflected light from the gray plate 124. The second reference reflected light amount value QL2 that is the primary reflected light amount value is input to the amplification circuit 154, and is output as the secondary reflected light amount value QL2·G2 amplified by the second amplification circuit 154B with the second amplification factor G2. The value is converted into a relative light amount value D2 (for example, 250) that is a digital value by the AD converter 156. The processor 170 acquires the relationship between the primary reflected light amount value and the relative light amount value as indicated by the alternate long and short dash line in Fig. 12 from the relationship between the second reference reflected light amount value QL2 and the relative light amount value D2 for the gray plate 124.

In the second amplification circuit 154B, the second amplification factor G2 is set in advance. The second amplification factor G2 is set such that the relative light amount value D2 acquired according to the reflected light amount of the gray plate 124 is a gradation value in the vicinity of the upper limit of the gradation range. However, the relative light amount value D2 corresponding to the second reference reflected light amount value QL2 that is the primary reflected light amount value from the gray plate 124 may be slightly shifted due to environmental changes, aging, and the like of the gray plate 124, the light sources 140, the light-receiving element 152, and the like.

The correlation between the relative light amount value and the reflectivity (Fig. 5B) is obtained by associating the relative light amount value D2 obtained for the gray plate 124 with the known reflectivity of the gray plate 124 (in this case, 10%).

As described above, the relationship between the second reference reflected light amount value QL2 and the corresponding relative light amount value D2, that is, the condition that the second reference reflected light amount value QL2 is amplified with the second amplification factor G2 and the correlation illustrated in Fig. 5B are acquired as the second derivation condition. The condition that the primary reflected light amount is amplified with the second amplification factor G2 and the correlation illustrated in Fig. 5B are stored in the memory 175 as the second derivation condition.

In the present example, the relative light amount value D1 for the white plate 122 and the relative light amount value D2 for the gray plate 124 are both 250, but the relative light amount value D1 and the relative light amount value D2 do not necessarily match.

In the analysis apparatus 100 of the second embodiment, the first derivation condition and the second derivation condition are acquired as described above.

The processor 170 controls each unit of the measurement unit 120 and executes a measurement process for the analysis chip 10. As described above, the processor 170 executes a process of detecting reflected light, converting the reflected light amount value into a relative light amount value that is a gradation value within a predetermined gradation range, deriving the optical density of a reaction region from the relative light amount value, and deriving the concentration of a test target substance based on the optical density, in accordance with a predetermined derivation condition. In the process of deriving the concentration of the test target substance, the processor 170 selectively uses the first derivation condition determined by using the first optical density plate 122 and the second derivation condition determined by using the second optical density plate 124 as the derivation condition.

When the first derivation condition is used, the processor 170 controls the measurement unit 120 such that the primary reflected light amount value that is the reflected light amount value corresponding to the reflected light from the analysis chip 10 is amplified with the first amplification factor G1 and then converted into a relative light amount value. The processor 170 derives the reflectivity based on the correlation between the relative light amount value and the reflectivity acquired by using the white plate 122 (Fig. 5A).

When the second derivation condition is used, the processor 170 controls the measurement unit 120 such that the primary reflected light amount value that is the reflected light amount value corresponding to the reflected light from the analysis chip 10 is amplified with the second amplification factor G2 and then converted into a relative light amount value. The processor 170 derives the reflectivity based on the correlation between the relative light amount value and the reflectivity acquired by using the gray plate 124 (Fig. 5B).

Also in the present example, the processor 170 preferably uses the first derivation condition at the time of measurement on the analysis chip 10 in which the optical density of the reaction region A after reaction is relatively low and the reflected light amount is large. On the other hand, the processor 170 preferably uses the second derivation condition at the time of measurement on the analysis chip 10 in which the optical density of the reaction region A after reaction is relatively high and the reflected light amount is small.

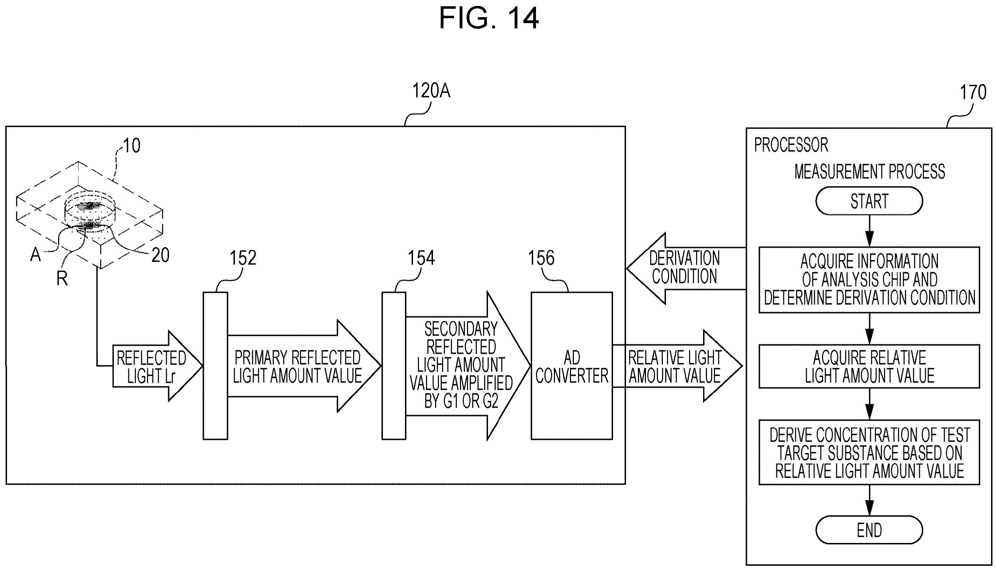

The measurement process on the analysis chip 10 in the second embodiment will be described with reference to Fig. 14.

First, the test substance sample 20 is dropped on the reaction region A of the analysis chip 10 by the dispensing mechanism 110 (see Fig. 1). Thereafter, the analysis chip 10 on which the test substance sample 20 has been dropped is loaded in the measurement unit 120A. The information code 17E is read by the information reader that reads the information code 17E given to the analysis chip 10 before the analysis chip 10 is loaded in the measurement unit 120A. The processor 170 identifies the type of the analysis chip 10 from the information code 17E read by the information reader. Thus, the processor 170 selects one of the first derivation condition and the second derivation condition according to the type of the analysis chip 10.

The processor 170 controls the measurement unit 120 such that the primary reflected light amount value is amplified by the amplification factor used when the relative light amount value is acquired under the selected derivation condition. That is, when the first derivation condition is selected, the processor 170 amplifies the primary reflected light amount value from the analysis chip 10 with the first amplification factor G1 and converts the value into the relative light amount value, and when the second derivation condition is selected, the processor amplifies the primary reflected light amount value from the analysis chip 10 with the second amplification factor G2 and converts the value into the relative light amount value.

After the analysis chip 10 is loaded in the measurement unit 120, a reflected light amount value for the analysis chip 10 is detected under a predetermined measurement condition. In the present embodiment, the measurement conditions including exposure time are the same regardless of whether the first derivation condition or the second derivation condition is selected. First, the analysis chip 10 is irradiated with the irradiation light L0 from the light sources 140. When the analysis chip 10 is irradiated with the irradiation light L0, the reflected light Lr reflecting information of a reaction substance generated by reaction between the test substance sample 20 and the regent R is generated from the reaction region A of the analysis chip 10. The light-receiving element 152 receives the reflected light Lr and outputs a primary reflected light amount value that is an analog value corresponding to the light amount of the reflected light Lr. The primary reflected light amount value is input to the amplification circuit 154. When the first derivation condition is selected, the amplification circuit 154 amplifies the primary reflected light amount value with the first amplification factor G1 and outputs the result as a secondary reflected light amount value. On the other hand, when the second derivation condition is selected, the amplification circuit 154 amplifies the primary reflected light amount value with the second amplification factor G2 and outputs the result as a secondary reflected light amount value.

The secondary reflected light amount value that is an analog value is input to the AD converter 156 and converted into a digital value, and the digital signal value is output as a relative light amount value corresponding to the light amount of the reflected light Lr. The processor 170 acquires the relative light amount value from the AD converter 156.

As described above, in the analysis apparatus 100 of the second embodiment, the processor 170 executes the step of using the analysis chip 10 having the reaction region A having the reagent R reacting with a test target substance, and amplifying the primary reflected light amount value of the reflected light Lr with the amplification factor corresponding to the selected optical density plate, thereby acquiring the relative light amount value corresponding to the light amount of the reflected light

Thereafter, the processor 170 derives the concentration of the test target substance based on the relative light amount value. Specifically, when the first derivation condition is selected, the processor 170 derives the reflectivity of the analysis chip 10 from the acquired relative light amount value by referring to the correlation illustrated in Fig. 5A, and derives the concentration of the test target substance by referring to the calibration curve stored in the memory 175 and indicating the relationship between the reflectivity and the concentration of the test target substance. When the second derivation condition is selected, the processor 170 derives the reflectivity of the analysis chip 10 from the acquired relative light amount value by referring to the correlation illustrated in Fig. 5B, and derives the concentration of the test target substance by referring to the calibration curve stored in the memory 175 and indicating the relationship between the reflectivity and the concentration of the test target substance.

Thus, the process of measuring the concentration of the test target substance included in the test substance sample 20 ends.

Also in the second embodiment, in the measurement process on the analysis chip 10, that is, in the process of deriving the concentration of a test target substance, the first derivation condition determined by using the first optical density plate (in this case, white plate) 122 and the second derivation condition determined by using the second optical density plate (in this case, gray plate) 124 are selectively used as the derivation condition. Therefore, by selecting and using the second derivation condition when the optical density of the reaction region A is high (that is, when the reflected light amount is small), the resolution can be improved for the analysis chip 10 in which the optical density of the reaction region A is high, and a decrease in the accuracy of detecting the concentration of the test target substance can be suppressed.

In the second embodiment, the first derivation condition and the second derivation condition are different in the light amount value assigned to the upper limit value of the gradation range when a reflected light amount value is converted into a relative light amount value, and the light amount value in the second derivation condition is smaller than the light amount value in the first derivation condition. Thus, the resolution can be improved for the analysis chip 10 in which the optical density of the reaction region A is high by a simple method of changing the amplification factor for the reflected light amount output from the photodetector.

While the case where the dry analysis chip 10 is used has been described in the first embodiment and the second embodiment, the analysis chip 10 may not necessarily be dry. However, in general, the dry type is designed to have a higher coloring amount than the liquid type, and the dry type has a relatively high optical density of the reaction substance. Therefore, the optical density is higher in the dry analysis chip than in the liquid analysis chip, and problems such as a decrease in S/N and a decrease in resolution are likely to occur. Therefore, the effect of the technique of the present disclosure is higher.

In the above-described embodiment, various processors described below can be used as the hardware structure of the processor 170. The various processors include, in addition to a CPU, which is a general-purpose processor that functions as various processing units by executing software (programs), a programmable logic device (PLD) such as a field-programmable gate array (FPGA) whose circuit configuration can be changed after manufacture, a dedicated electric circuit such as an application specific integrated circuit (ASIC), which is a processor having a circuit configuration designed exclusively for executing a specific process, and the like.

The above-described process may be executed by one of the various processors, or may be executed by a combination of two or more processors of the same type or different types (for example, a plurality of FPGAs, a combination of a CPU and an FPGA, or the like). A plurality of processing units may be configured with one processor. As an example of configuring a plurality of processing units with one processor, there is a form of using a processor that realizes the functions of the entire system including a plurality of processing units with one integrated circuit (IC) chip, such as a system on chip (SOC).

As the hardware structure of such a processor, more specifically, an electric circuit (circuitry) in which circuit elements such as semiconductor elements are combined can be used.

The technique of the present disclosure extends to a computer-readable storage medium (a USB memory, a digital versatile disc (DVD)-read only memory (ROM), or the like) that non-transitorily stores an operation program of the analysis apparatus, in addition to the operation program of the analysis apparatus.

Regarding the above-described embodiments, the following appendices are further disclosed.

### (Appendix 1)

An analysis apparatus that analyzes a test substance sample using an analysis chip having a reaction region in which a reagent reacting with a test target substance is fixed, the analysis apparatus including:
a light source that irradiates the reaction region of the analysis chip with light;
a photodetector that detects reflected light from the reaction region generated when the reaction region is irradiated with the light, and outputs a reflected light amount value corresponding to a light amount of the reflected light;
at least two kinds of optical density plates of a white first optical density plate having first optical density of 0 to 0.5 and a gray second optical density plate having second optical density of 0.8 to 1.5; and
a processor,
in which the processor is configured to:
   execute a deriving process of detecting the reflected light, converting the reflected light amount value into a relative light amount value that is a gradation value within a predetermined gradation range, deriving optical density of the reaction region from the relative light amount value, and deriving a concentration of the test target substance based on the optical density, in accordance with a predetermined derivation condition, and
   in the deriving process, selectively apply either a first derivation condition determined by using the first optical density plate or a second derivation condition determined by using the second optical density plate as the derivation condition.

### (Appendix 2)

The analysis apparatus according to appendix 1, in which the processor is configured to selectively apply either the first derivation condition or the second derivation condition based on a preset condition.

### (Appendix 3)

The analysis apparatus according to appendix 2, in which
the preset condition is a type of the analysis chip, and
the processor is configured to apply the second derivation condition when the analysis chip is an analysis chip including a specific reagent.

### (Appendix 4)

The analysis apparatus according to appendix 3, in which the analysis chip including the specific reagent is an analysis chip in which the optical density of the reaction region after reaction between the specific reagent and the test target substance exceeds a preset threshold value.

### (Appendix 5)

The analysis apparatus according to any one of appendices 1 to 4, further including a black plate for obtaining a light amount value to be assigned to a lower limit value of the gradation range.

### (Appendix 6)

The analysis apparatus according to any one of appendices 1 to 5, in which the photodetector is an image sensor having a light-receiving surface on which a plurality of light-receiving elements are arranged at least one dimensionally.

### (Appendix 7)

The analysis apparatus according to any one of appendices 1 to 6, in which
the first derivation condition and the second derivation condition are different in exposure time at a time of detection of the reflected light, and
the exposure time in the second derivation condition is longer than the exposure time in the first derivation condition.

### (Appendix 8)

The analysis apparatus according to any one of appendices 1 to 7, in which
the first derivation condition and the second derivation condition are different in a light amount value to be assigned to an upper limit value of the gradation range when the reflected light amount value is converted into the relative light amount value, and
the light amount value in the second derivation condition is smaller than the light amount value in the first derivation condition.

### (Appendix 9)

The analysis apparatus according to any one of appendices 1 to 8, in which the analysis chip is a dry analysis chip using a solid-phase reagent as the reagent.

The disclosure of JP2023-012144 filed on January 30, 2023 is incorporated herein by reference in its entirety. All publications, patent applications, and technical standards mentioned in this specification are herein incorporated by reference to the same extent as if each publication, patent application, or technical standard was specifically and individually indicated to be incorporated by reference.

### Reference Signs List

10 analysis chip
16 carrier
17 case
17A first case
17B second case
17C opening
17D opening
17E information code
20 test substance sample
100 analysis apparatus
110 dispensing mechanism
120, 120A measurement unit
122 first optical density plate (white plate)
124 second optical density plate (gray plate)
130 loading unit
140 light source
150, 150A photodetector
152 light-receiving element
154 amplification circuit
154A first amplification circuit
154B second amplification circuit
156 AD converter
170 processor
175 memory
A reaction region
D digital signal
D1, D2 relative light amount value
G1 first amplification factor
G2 second amplification factor
L0 irradiation light
Lr reflected light
QAmax maximum light amount value
QL primary reflected light amount value
QL1 first reference reflected light amount value
QL2 second reference reflected light amount value
R reagent
t1 first exposure time
t2 second exposure time

## Claims

1. An analysis apparatus that analyzes a test substance sample using an analysis chip having a reaction region in which a reagent reacting with a test target substance is fixed, the analysis apparatus comprising:
a light source that irradiates the reaction region of the analysis chip with light;
a photodetector that detects reflected light from the reaction region generated when the reaction region is irradiated with the light, and outputs a reflected light amount value corresponding to a light amount of the reflected light;
at least two kinds of optical density plates of a white first optical density plate having first optical density of 0 to 0.5 and a gray second optical density plate having second optical density of 0.8 to 1.5; and
a processor,
wherein the processor is configured to:
execute a deriving process of detecting the reflected light, converting the reflected light amount value into a relative light amount value that is a gradation value within a predetermined gradation range, deriving optical density of the reaction region from the relative light amount value, and deriving a concentration of the test target substance based on the optical density, in accordance with a predetermined derivation condition, and
in the deriving process, selectively apply either a first derivation condition determined by using the first optical density plate or a second derivation condition determined by using the second optical density plate as the derivation condition.

2. The analysis apparatus according to claim 1, wherein the processor is configured to selectively apply either the first derivation condition or the second derivation condition based on a preset condition.

3. The analysis apparatus according to claim 2, wherein
the preset condition is based on a type of the analysis chip, and
the processor is configured to apply the second derivation condition when the analysis chip is an analysis chip including a specific reagent.

4. The analysis apparatus according to claim 3, wherein the analysis chip including the specific reagent is an analysis chip in which the optical density of the reaction region after reaction between the specific reagent and the test target substance exceeds a preset threshold value.

5. The analysis apparatus according to claim 1, further comprising a black plate for obtaining a light amount value to be assigned to a lower limit value of the gradation range.

6. The analysis apparatus according to any one of claims 1 to 5, wherein the photodetector is an image sensor having a light-receiving surface on which a plurality of light-receiving elements are arranged at least one dimensionally.

7. The analysis apparatus according to any one of claims 1 to 5, wherein
the first derivation condition and the second derivation condition are different in exposure time at a time of detection of the reflected light, and
the exposure time in the second derivation condition is longer than the exposure time in the first derivation condition.

8. The analysis apparatus according to any one of claims 1 to 5, wherein
the first derivation condition and the second derivation condition are different in a light amount value to be assigned to an upper limit value of the gradation range when the reflected light amount value is converted into the relative light amount value, and
the light amount value in a second derivation condition is smaller than the light amount value in the first derivation condition.

9. The analysis apparatus according to any one of claims 1 to 5, wherein the analysis chip is a dry analysis chip using a solid-phase reagent as the reagent.
